(19) Europäisches Patentamt
European Patent Office
Office européen des brevets

(11) **EP 3 207 112 B1**

(12) **EUROPÄISCHE PATENTSCHRIFT**

(45) Veröffentlichungstag und Bekanntmachung des Hinweises auf die Patenterteilung:
**18.12.2019 Patentblatt 2019/51**

(51) Int Cl.:
*C11D 3/00* (2006.01)          *B01D 19/04* (2006.01)
*C11D 3/37* (2006.01)

(21) Anmeldenummer: **16721381.8**

(22) Anmeldetag: **26.04.2016**

(86) Internationale Anmeldenummer:
**PCT/EP2016/059262**

(87) Internationale Veröffentlichungsnummer:
**WO 2016/174016 (03.11.2016 Gazette 2016/44)**

(54) **ANTISCHAUMMITTEL UND DEREN VERWENDUNG IN WASCHMITTELN**

ANTI-FOAMING AGENT AND USE OF SAME IN DETERGENTS

AGENT ANTIMOUSSE ET UTILISATION DE CE DERNIER DANS LES LESSIVES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.04.2015 DE 102015207890**

(43) Veröffentlichungstag der Anmeldung:
**23.08.2017 Patentblatt 2017/34**

(73) Patentinhaber: **Wacker Chemie AG**
**81737 München (DE)**

(72) Erfinder:
• **MERGET, Markus**
**84561 Mehring (DE)**
• **BECKER, Richard**
**Ann Arbor, MI 48103 (US)**

(74) Vertreter: **Deffner-Lehner, Maria et al**
**Wacker Chemie AG**
**Zentralbereich Patente, Marken und Lizenzen**
**Hanns-Seidel-Platz 4**
**81737 München (DE)**

(56) Entgegenhaltungen:
**WO-A1-2011/107397          WO-A1-2013/189825**
**US-A1- 2012 329 701          US-A1- 2013 309 498**

**Beschreibung**

Die Erfindung betrifft Antischaummittel und deren Verwendung in Waschmittelzusammensetzungen.

Bei der Handwäsche wird Wasser in einen Eimer oder Einweichbehälter und bei der maschinenunterstützten Handwäsche in die Waschtrommel einer Waschmaschine gegeben. Anschließend wird die gewünschte Menge an Waschmittel dosiert. Durch Umrühren mit der Hand oder Laufenlassen der Waschmaschine wird Schaum erzeugt. Im nächsten Schritt wird die schmutzige Wäsche eingetaucht und für 10 bis 30 min einweichen gelassen. Bei der Handwäsche wird nach dieser Zeit die Wäsche mit der Hand zur Schmutzentfernung gewaschen. Bei Waschmaschinen wird der Waschzyklus gestartet (Dauer: ca. 60 Minuten). Eine signifikante Schaumbildung während des Waschgangs wird als eine gute Reinigungswirkung des Waschmittels interpretiert.

Beim Spülen wird die überschüssige Waschflotte weggeschüttet und die Textilien werden zur Entfernung der überschüssigen, aufgesaugten Waschflotte ausgewrungen. Die Spülgänge bestehen aus Zugabe von Frischwasser, Spülen der Textilien zur Entfernung von Waschmittel-Resten, Wegschütten der Spülflotte und Auswringen der Textilien zur Entfernung der aufgesaugten Spülflotte. In der Regel werden diese Spülgänge solange wiederholt, bis kein Schaum mehr sichtbar ist (4 bis 5 Mal). Die Bildung von Schaum während des Spülgangs wird mit dem Vorhandensein von Waschmittel in Bezug gesetzt, was nicht erwünscht ist.

Um den Wasserverbrauch zu reduzieren und die Umwelt zu entlasten, wäre es deshalb wünschenswert, ein Antischaummittel zu haben, das im Waschgang nicht oder nur kaum die Schaumbildung beeinflusst und im Spülgang die Bildung von neuem Schaum nachhaltig unterdrückt. Dadurch könnte die Anzahl an Spülgängen und damit die Menge an verbrauchtem Wasser reduziert werden.

In US 4,637,890 ist eine granulare Waschmittelzusammensetzung beschrieben, welche ein verringertes Schäumen und eine verringerte Spülwassertrübung während dem auf einen Waschgang folgenden Spülgang bewirkt, wobei die Zusammensetzung ein grenzflächenaktives Mittel, einen wasserlöslichen Detergensgerüststoff und Schaumregelungsgranulate, die ein Siliconöl als schaumunterdrückendes Mittel sowie zusätzlich Fettsäureseife und ein quaternäres Ammoniumsalz enthalten, umfasst.

Das Antischaummittel wird in diesem Fall erst bei niedrigem pH-Wert aktiv, im Waschgang bei pH-Werten von > 9 ist es inaktiv. Bei der Handwäsche bzw. bei der maschinenunterstützten Handwäsche und bei der Maschinenwäsche werden üblicherweise bei nicht industriellen Anwendung diese hohen pH-Werte nicht erreicht, so dass die entschäumende Wirkung bereits im Waschgang einsetzt.

US 4,894,117 beschreibt eine Zusammensetzung eines agglomerierten Granulates für die verzögerte Freisetzung eines Antischaummittels in einer Waschflotte. Diese Antischaumgranulate zeigen eine verzögerte Freisetzung dadurch bedingt, dass das Siliconantischaummittel mit Cellulose verkapselt ist.

In EP 254 499 B1 wird eine Siliconentschäumerzusammensetzung offenbart, die erhalten wird durch Reaktion einer Mischung eines trimethylsilylterminierten Polydimethylsiloxans und eines silanolterminierten Polydimethylsiloxans mit einem Polyoxyethylen-Polyoxypropylen-Copolymeren und mit Silica. Die Verwendung als Antischaummittel in Waschmittelzusammensetzungen wird nicht beschrieben.

Die beiden oben genannten Dokumente nutzen als Technologie die Einkapselung von Siliconen bzw. Silicon-Entschäumern, wobei diese Substanzklassen eine starke Antischaumwirkung haben. Die Aktivität der verzögerten Antischaumwirkung im Spülgang ist von der Freisetzung dieser Wirkstoffe abhängig, die wiederum von vielen Parametern wie zum Beispiel der Temperatur der Flotte und der Dauer der einzelnen Schritte abhängt. Deshalb ist die Anwendung dieser Systeme ausschließlich bei der Maschinenwäsche möglich, wo hinsichtlich Temperatur und Dauer reproduzierbare Bedingungen vorliegen. Bei der Handwäsche oder bei der maschinenunterstützten Handwäsche können diese Systeme auf Grund der unterschiedlichen Waschgewohnheiten nicht eingesetzt werden. Auf der anderen Seite ist ein Produkt, das eine verzögerte Antischaumwirkung bzw. Schaumunterdrückung unabhängig von äußeren Parameter im Spülgang bei der Handwäsche oder bei der maschinenunterstützten Handwäsche hat, auch bei der Maschinenwäsche wirksam. US 2013/0309498 A1 offenbart flüssige Organosiloxane auf Natriumsulfatträger.

WO 2011/107361 A2 und WO 2011/107397 A1 beschreiben als Antischaummittel ein Polyether-haltiges Aminosiloxan bzw. ein Pulver, welches ein Polyether-haltiges Aminosiloxan auf einer Trägersubstanz enthält, sowie das Herstellungsverfahren als auch die Verwendung dieses Antischaummittels in Waschmittelzusammensetzungen für Handwäsche und Maschinenwäsche, wobei das Antischaummittel erst während des Spülganges seine Antischaumwirkung entfaltet. Das dem Antischaummittel zu Grunde liegende Aminosiloxan enthält ein endständiges Polyether-Fragment.

Als Wirkstoffe werden also Polyether-haltige Aminosiloxane, die erst im Spülgang eine verzögerte Antischaumwirkung bzw. Schaumunterdrückung entfalten, eingesetzt, die aufwendig herzustellen sind. Solche Materialien werden in der Praxis durch Äquilibrierungsreaktionen ausgehend von OH-terminierten Polydimethylsiloxanen, $\alpha,\omega$-Polyetherfunktionellen Siloxanen und Hydrolysaten der entsprechenden Aminoalkylsilanen erzeugt. Nachteilig wirkt sich aus, dass bei deren Synthese oftmals zweiphasige Reaktionsgemische erhalten werden, da auf Grund von unterschiedlichen Polaritäten das Polyethersiloxan nicht mit den restlichen Komponenten kompatibel ist.

**EP 3 207 112 B1**

EP 685 250 A1 offenbart die Verwendung einer Mischung aus einem Aminosiloxan und einer hochdispersen Kieselsäure in Waschmitteln zur Verhinderung der Schaumbildung während des Spülgangs.

Nachteilig wirkt sich bei diesen Mischungen aus, dass bereits im Waschgang und nicht erst im Spülgang die Entschäumerwirkung einsetzt. Bei der Handwäsche bzw. bei der maschinenunterstützten Handwäsche ist eine starke Schaumbildung beim Waschgang erwünscht und wird als ein Zeichen von guter Reinigungswirkung des Waschmittels und damit von Sauberkeit interpretiert.

In WO 2013/189825 A1 wird als Antischaummittel ein Aminöl auf einer Trägersubstanz beschrieben. Nachteilig ist die verminderte Lagerstabilität, d. h. die Entschäumerwirkung nimmt nach Lagerung des Antischaummittels ab.

Es bestand die Aufgabe ein Antischaummittel in Substanz oder als Pulver auf einem Trägermaterial bereitzustellen, das bevorzugt in Waschmittelformulierungen für Textilien, eingesetzt werden kann, wobei das Schaumverhalten des Waschmittels im Waschgang nicht beeinflusst wird und erst bei den Spülgängen zeitlich verzögert eine gute Entschäumerwirkung auftritt und wobei die Entschäumerwirkung auch nach Lagerung des Antischaummittel bzw. des Pulver nicht wesentlich vermindert wird.

Gegenstand der Erfindung sind Antischaumpulver mit verzögerter Antischaumwirkung enthaltend

(1) 5 bis 35 Gew.-% eines Antischaummittels, welches ein modifiziertes, aminofunktionelles Organopolysiloxan bestehend aus mindestens einer Siloxaneinheit der Formel

$$R^1_a Q_b SiO_{\frac{4-(a+b)}{2}} \qquad (I)$$

und Siloxaneinheiten der Formel

$$R^1_c SiO_{\frac{4-c}{2}} \qquad (II)$$

ist, wobei

$R^1$ gleich oder verschieden ist und ein Wasserstoffatom, einen einwertigen, gegebenenfalls mit Fluor-, Chlor- oder Brom-atomen substituierten $C_1$- bis $C_{18}$-Kohlenwasserstoffrest oder einen $C_1$- bis $C_{12}$-Alkoxyrest oder einen Hydroxyrest bedeutet,

vorzugsweise einen $C_1$- bis $C_{18}$-Kohlenwasserstoffrest oder einen $C_1$- bis $C_3$-Alkoxyrest oder einen Hydroxyrest bedeutet, Q gleich oder verschieden ist und einen modifizierten oder nicht-modifizierten Aminorest der Formel

$$-R^2-[NR^3-(CH_2)_m-]_x NR^4 R^5 \qquad (III)$$

oder deren teilweise oder vollständig an den Stickstoffatomen protonierte Formen bedeutet,
wobei
$R^2$ einen zweiwertigen $C_1$-$C_{18}$-Kohlenwasserstoffrest, vorzugsweise einen zweiwertigen $C_2$- bis $C_4$-Kohlenwasserstoffrest, bedeutet,
$R^3$ ein Wasserstoffatom, einen $C_1$-$C_{10}$-Alkylrest oder einen Rest G der Formel

$$-C(=O)-O-R^6 \qquad (IV),$$

bedeutet,
$R^4$ ein Wasserstoffatom, einen $C_1$-$C_{10}$-Alkylrest oder einen Rest G der Formel (IV) bedeutet,
$R^5$ ein Wasserstoffatom, einen $C_1$-$C_{10}$-Alkylrest oder einen Rest G der Formel (IV) bedeutet,
$R^6$ einen einwertigen Kohlenwasserstoffrest mit 1 bis 18 C-Atomen, der unsubstituiert ist oder mit einer oder zwei Hydroxygruppen, vorzugsweise mit einer Hydroxygruppe, substituiert ist, bedeutet,
mit der Maßgabe, dass mindestens ein Rest Q mindestens einen Rest G der Formel (IV) aufweist,
a 0, 1 oder 2, vorzugsweise 0 oder 1, ist,
b 1, 2 oder 3, vorzugsweise 1, ist,
c 0, 1, 2 oder 3, vorzugsweise 2 oder 3, ist,
m 2, 3, oder 4, vorzugsweise 2 oder 3, ist und
x 0, 1 oder 2, vorzugsweise 0 oder 1, ist,
und die Summe a+b kleiner gleich 3 ist, und

3

EP 3 207 112 B1

(2) 65 bis 95 Gew.-% eines Trägermaterials ausgewählt aus der Gruppe von Natriumcarbonat, Natriumsulfat, Aluminiumsilikat, Kaliumcarbonat, Kaliumsulfat, Natriumhydrogencarbonat, Kaliumhydrogencarbonat, Zeolithe, poröses Copolymer aus Harnstoff oder Melamin oder deren Gemischen mit einem Alkanal und Mischungen davon.

Vorzugsweise besteht das erfindungsgemäße Antischaumpulver aus (1) Aminosiloxan und dem oben genannten (2) Trägermaterial.

Vorzugsweise ist daher die Mitverwendung von Kieselsäuren in den erfindungsgemäßen Antischaumpulvern ausgeschlossen.

Die erfindungsgemäßen Organopolysiloxane enthalten vorzugsweise sowohl Aminoreste Q, die mindestens einen Rest G der Formel (IV) aufweisen, d. h. modifiziert sind, als auch Aminoreste Q, die keinen Rest G der Formel (IV) aufweisen, d. h. nichtmodifiziert sind. Im Organopolysiloxan (1) ist mindestens ein modifizierter Aminorest Q enthalten.

Beispiele für $C_1$- bis $C_{18}$-Kohlenwasserstoffreste $R^1$ sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der alpha- und der beta-Phenylethylrest.

Beispiele für mit Fluor-, Chlor- oder Brom-atomen substituierten Reste $R^1$ sind Halogenalkylreste, wie der 3,3,3-Trifluor-n-propylrest, der 2,2,2,2',2',2'-Hexafluorisopropylrest, der Heptafluor-isopropylrest und der o-, m- und p-Chlorphenylrest.

Die Alkoxyreste $R^1$ sind über ein Sauerstoffatom gebundene vorstehend beschriebene Alkylreste, wobei Beispiele für diese Alkylreste auch im vollen Umfang für die Alkoxyreste gelten.

Beispiele für die zweiwertigen $C_1$- bis $C_{18}$-Kohlenwasserstoffreste $R^2$ sind gesättigte gerad- oder verzweigtkettige oder cyclische Alkylenreste, wie der Methylen- und Ethylenrest sowie Propylen-, Butylen-, Pentylen-, Hexylen-, 2-Methylpropylen-, Cyclohexylen- und Octadecylenreste oder ungesättigte Alkylen- oder Arylenreste, wie der Hexenylenrest und Phenylenreste, wobei der n-Propylenrest und der 2-Methylpropylenrest besonders bevorzugt sind.

Beispiele für $C_1$- bis $C_{10}$-Alkylreste $R^3$, $R^4$ und $R^5$ sind die vorstehend bei $R^1$ aufgeführten Beispiele für lineare und cyclische Alkylreste und für mit Fluor-, Chlor- oder Bromatomen substituierten $C_1$- bis $C_{10}$-Alkylreste.

Beispiele für $C_1$ bis $C_{18}$-Kohlenwasserstoffreste $R^6$ sind die vorstehend bei $R^1$ aufgeführten Kohlenwasserstoffreste, wobei die Kohlenwasserstoffreste unsubstituiert sind oder mit einer oder zwei Hydroxygruppen, vorzugsweise mit einer Hydroxygruppe, substituiert sind.

Bevorzugte Beispiele für $R^6$ sind Reste der Formel

$-CH_2-CH_2-OH$,

$-CH(CH_3)CH_2OH$,

$-CH_2CH(CH_3)OH$,

$-CH_2CH(CH_2OH)_2$

und

$-CH(CH_2OH)CH_2(CH_2OH]$,

wobei der Rest der Formel

$-CH_2CH(CH_3)OH$          (VI)

ein besonders bevorzugter Rest $R^6$ ist.

Bevorzugte Beispiele für Reste G sind daher Reste der Formel

$-C(=O)-O-CH_2-CH_2-OH$,

$-C(=O)-O-CH(CH_3)CH_2OH$,

4

-C(=O)-O-CH$_2$CH(CH$_3$)OH,

-C(=O)-O-CH$_2$CH(CH$_2$OH)$_2$

und

-C(=O)-O-CH(CH$_2$OH)CH$_2$(CH$_2$OH],

wobei -C(=O)-O-CH$_2$CH(CH$_3$)OH besonders bevorzugt ist.

Beispiele für nicht-modifizierte Aminoreste Q sind solche der Formel

NH$_2$CH$_2$CH$_2$NH(CH$_2$)$_3$-,

NH$_2$(CH$_2$)$_3$-,

CH$_3$NHCH$_2$CH$_2$NH(CH$_2$)$_3$-,

(CH$_3$)$_2$NCH$_2$CH$_2$NH(CH$_2$)$_3$-,

(CH$_3$)$_2$NCH$_2$CH$_2$CH$_2$NH(CH$_2$)$_3$-,

CH$_3$CH$_2$HN(CH$_2$)$_2$NH(CH$_2$)$_3$-,

(CH$_3$CH$_2$)$_2$N(CH$_2$)$_2$NH(CH$_2$)$_3$-,

CH$_3$CH$_2$CH$_2$HN(CH$_2$)$_2$NH(CH$_2$)$_3$-,

(CH$_3$CH$_2$CH$_2$)$_2$N(CH$_2$)$_2$NH(CH$_2$)$_3$-

und

(Cyclohexyl) HN (CH$_2$)$_2$NHCH$_2$CH(CH$_3$)CH$_2$-,

wobei NH$_2$CH$_2$CH$_2$NH(CH$_2$)$_3$- ein bevorzugtes Beispiel ist,
oder deren teilweise oder vollständig an den Stickstoffatomen protonierte Formen.
Beispiele für modifizierte Aminoreste sind Reste der Formel

(G-)NHCH$_2$CH$_2$NH(CH$_2$)$_3$-

NH$_2$CH$_2$CH$_2$(G-)N(CH$_2$)$_3$-,

(G-)NHCH$_2$CH$_2$(G-)N(CH$_2$)$_3$-,

(G-)$_2$NCH$_2$CH$_2$NH(CH$_2$)$_3$- und (G-)$_2$NCH$_2$CH$_2$(G-)N(CH$_2$)$_3$-,

wobei G ein Rest der Formel (IV) ist, vorzugsweise G Reste der Formeln

-C(=O)-O-CH$_2$-CH$_2$-OH,

-C(=O)-O-CH(CH$_3$)CH$_2$OH,

-C(=O)-O-CH$_2$CH(CH$_3$)OH,

-C(=O)-O-CH$_2$CH(CH$_2$OH)$_2$

und

-C(=O)-O-CH(CH$_2$OH)CH$_2$(CH$_2$OH]

sind, und bevorzugt G ein Rest der Formel -C(=O)-O-CH$_2$CH(CH$_3$)OH ist.

Beispiele für bevorzugte modifizierte Aminoreste Q sind solche der Formel

HO (CH$_2$)$_2$OC(=O)NH(CH$_2$)$_2$NH(CH$_2$)$_3$-

HOCH$_2$CH(CH$_3$)OC(=O)NH(CH$_2$)$_2$NH(CH$_2$)$_3$-

HOCH(CH$_3$)CH$_2$OC(=O)NH(CH$_2$)$_2$NH(CH$_2$)$_3$-

HOCH$_2$CH(CH$_2$OH)OC(=O)NH(CH$_2$)$_2$NH(CH$_2$)$_3$-

HOCH(CH$_2$OH)CH$_2$OC(=O)NH(CH$_2$)$_2$NH(CH$_2$)$_3$-

H$_2$N(CH$_2$)$_2$N[C(=O)O(CH$_2$)$_2$OH](CH$_2$)$_3$-

H$_2$N(CH$_2$)$_2$N[C(=O)OCH$_2$CH(CH$_3$)OH](CH$_2$)$_3$-

H$_2$N(CH$_2$)$_2$N[C(=O)OCH(CH$_3$)CH$_2$OH](CH$_2$)$_3$-

H$_2$N(CH$_2$)$_2$N[C(=O)OCH$_2$CH(CH$_2$OH)OH](CH$_2$)$_3$-

H$_2$N(CH$_2$)$_2$N[C(=O)OCH(CH$_2$OH)CH$_2$OH](CH$_2$)$_3$-

[HO(CH$_2$)OC(=O)]$_2$N(CH$_2$)$_2$NH(CH$_2$)$_3$-

[HOCH$_2$CH(CH$_3$)OC(=O)]$_2$N(CH$_2$)$_2$NH(CH$_2$)$_3$-

[HOCH(CH$_3$)CH$_2$OC(=O)]$_2$N(CH$_2$)$_2$NH(CH$_2$)$_3$-

[HOCH$_2$CH(CH$_2$OH)OC(=O)]$_2$N(CH$_2$)$_2$NH(CH$_2$)$_3$-

[HOCH(CH$_2$OH)CH2OC(=O)]$_2$N(CH$_2$)$_2$NH(CH$_2$)$_3$-

[HO(CH$_2$)OC(=O)]$_2$N(CH$_2$)$_2$N[C(=O)O(CH$_2$)$_2$OH](CH$_2$)$_3$-

[HOCH$_2$CH(CH$_3$)OC(=O)]$_2$N(CH$_2$)$_2$N[C(=O)OCH(CH$_3$)CH$_2$OH](CH$_2$)$_3$-

[HOCH(CH$_3$)CH$_2$OC(=O)]$_2$N(CH$_2$)$_2$N[C(=O)OCH$_2$CH(CH$_3$)OH](CH$_2$)$_3$-

[HOCH$_2$CH(CH$_2$OH)OC(=O)]$_2$N(CH$_2$)$_2$N[C(=O)OCH(CH$_2$OH)CH$_2$OH](CH$_2$)$_3$-

und

[HOCH(CH$_2$OH)CH$_2$OC(=O)]$_2$N(CH$_2$)$_2$N[C(=O)OCH$_2$CH (CH$_2$OH)OH](CH$_2$)$_3$-.

Besonders bevorzugt als Antischaummittel sind modifizierte, aminofunktionelle Organopolysiloxane der Formel

Q$_k$R$^1_{3-k}$SiO(R$_2$SiO)$_p$(QR$^1$SiO)$_n$SiR$^1_{3-k}$Q$_k$          (V)

wobei

R      gleich oder verschieden ist und einen einwertigen C$_1$-bis C$_{18}$-Kohlenwasserstoffrest bedeutet,
R$^1$    die oben dafür angegebene Bedeutung hat,
Q      die oben dafür angegebene Bedeutung hat,
k      0 oder 1 ist,
p      0 oder eine ganze Zahl von 1 bis 1000 ist,
n      0 oder eine ganze Zahl von 1 bis 50 ist,

mit der Maßgabe, dass die Organopolysiloxane mindestens einen Rest Q, der mindestens einen Rest G der Formel (IV) aufweist, je Molekül enthalten.

Beispiele für $C_1$- bis $C_{18}$-Kohlenwasserstoffreste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der alpha- und der beta-Phenylethylrest.

Die Organopolysiloxane der Formel (V) enthalten vorzugsweise sowohl Aminoreste Q, die mindestens einen Rest G der Formel (IV) aufweisen, d. h. modifiziert sind, als auch Aminoreste Q, die keinen Rest G der Formel (IV) aufweisen, d. h. nichtmodifiziert sind. Die Organopolysiloxane der Formel (V) enthalten daher mindestens einen modifizierten Aminorest Q.

Beispiele für modifizierte, aminofunktionelle Organopolysiloxane der Formel (V) sind mit Trimethylsiloxaneinheiten terminierte aminofunktionelle Polydimethylsiloxane und mit Hydroxydimethylsiloxaneinheiten und $C_1$-$C_3$-Alkoxy-dimethyl-siloxaneinheiten terminierte aminofunktionelle Polydimethylsiloxane.

Vorzugsweise beträgt das Verhältnis der Siloxaneinheiten der allgemeinen Formel (I) zu den Siloxaneinheiten der allgemeinen Formel (II) 1 : 1 bis 1 : 10 000, bevorzugt 1 : 2 bis 1 : 300. Die Amingehalte betragen vorzugsweise 0,05 bis 6 mequiv/g, bevorzugt 0,1 bis 5 mequiv/g, gemessen als Verbrauch an 1n Salzsäure in ml/g aminofunktionelles Organopolysiloxan bei der Titration bis zum Neutralpunkt.

Die modifizierten, aminofunktionellen Organopolysiloxane haben vorzugsweise eine durchschnittliche Viskosität von 25 bis 100 000 mPa.s, bevorzugt 50 bis 50 000 mPa.s, bei 25°C.

Die modifizierten, aminofunktionellen Organopolysiloxane können verdünnt in organischen Lösungsmitteln eingesetzt werden. Beispiele für organische Lösungsmittel sind Alkohole, wie Methanol, Ethanol, Isopropanol und Butanol.

Aminofunktionelle Organopolysiloxane sind bekannt und deren Herstellung ist beispielsweise in WO 2013/189825 A1 beschrieben. Die erfindungsgemäßen modifizierten, aminofunktionellen Organopolysiloxane (1) werden vorzugsweise hergestellt, indem aminofunktionelle Organopolysiloxane mit acyclischen oder cyclischen Carbonaten umgesetzt werden. Beispiele für cyclische Carbonate sind 4-Methyl-1,3-dioxolan-2-on und 1,3-Dioxolan-2-on und 4-(Hydroxymethyl)-1,3-dioxolan-2-on. Ein Beispiel für ein acyclisches Carbonat ist Diethylcarbonat.
Die acyclischen und cyclischen Carbonate werden vorzugsweise in Mengen von 0,01 bis 1,45 Mol Carbonat je Mol nichtmodifizierter, primärer und sekundärer Aminorest im aminofunktionellen Organopolysiloxan eingesetzt. Die Umsetzung erfolgt vorzugsweise bei Temperaturen von 20 bis 160°C und vorzugsweise beim Druck der umgebenden Atmosphäre.

Es kann als Antischaummittel eine Art von aminofunktionellen Organopolysiloxanen (1) oder verschiedene Arten von aminofunktionellen Organopolysiloxanen (1) eingesetzt werden.

Die Aminoreste Q in Formel (I) und Formel (V) können teilweise oder vollständig protoniert sein.

Der Aminorest Q der Formel (III) kann teilweise oder vollständig protoniert sein durch Hinzufügen von Säuren zu den aminofunktionellen Organopolysiloxanen, wobei die Salzformen der Aminoreste erhalten werden.

Beispiele für Säuren sind Carbonsäuren mit 3 bis 18 Kohlenstoffatomen, die linear oder verzweigt sein können, wie Ameisensäure, Essigsäure, Propionsäure, Butansäure, Pivalinsäure, Sorbinsäure, Benzoesäure und Salicylsäure.

Vorzugsweise können die erfindungsgemäßen Organopolysiloxane (1) protonierte Aminoreste Q' der Formel

$$-R^2-[NR^3-(CH_2)_m-]_x NH^+R^4R^5\ Z^- \qquad (Va)$$

oder

$$-R^2-[NH^+R^3-(CH_2)_m-]_x NH^+R^4R^5\ (x+1)\ Z^-\ , \qquad (Vb),$$

wobei

Z⁻ ein Anion zu N⁺ ist, vorzugsweise ein Anion einer korrespondierenden Säure, bevorzugt ein Anion einer Carbonsäure, wie ein Acetatanion ist,
und $R^2$, $R^3$, $R^4$, $R^5$, m und x die oben dafür angegebenen Bedeutungen haben, enthalten.

Ein bevorzugtes Beispiel für einen nicht-modifizierten Aminorest Q ist der Rest $NH_2CH_2CH_2NH(CH_2)_3$-
und die Reste
$N^+H_3CH_2CH_2NH(CH_2)_3$- Z⁻ oder $N^+H_3CH_2CH_2N^+H_2(CH_2)_3$- 2 Z⁻ (wobei Z⁻ die oben dafür angegebene Bedeutung hat) sind daher bevorzugte protonierte Aminoreste Q'.

Beispiele für bevorzugte modifizierte Aminoreste sind Reste der Formeln

$$(G-)NHCH_2CH_2NH(CH_2)_3-$$

$$NH_2CH_2CH_2(G-)N(CH_2)_3-,$$

$$(G-)NHCH_2CH_2(G-)N(CH_2)_3-,$$

$$(G-)_2NCH_2CH_2NH(CH_2)_3- \text{ und } (G-)_2NCH_2CH_2(G-)N(CH_2)_3-,$$

wobei die modifizierten Reste teilweise oder ganz protoniert an den Stickstoffatomen sein können,
wobei G ein Rest der Formel (IV), vorzugsweise ein Rest der Formel $-C(=O)-O-CH_2CH(CH_3)OH$ (VI) ist.

Die erfindungsgemäßen Antischaumpulver werden vorzugsweise hergestellt durch Mischen der modifizierten, aminofunktionellen Organopolysiloxane (1) mit den Trägermaterialien (2).

Bevorzugt wird das Trägermaterial (2) vorgelegt und dann das Aminosiloxan (1) dazugegeben und mit (2) vermischt. Das Mischen kann bei Temperaturen von 20 bis 120°C und beim Druck der umgebenden Atmosphäre, also bei etwa 1020 hPa, oder auch bei höheren oder niedrigeren Drücken erfolgen.

Als Trägermaterial kann ein poröses Copolymer aus Harnstoff oder Melamin oder deren Gemischen mit einem Alkanal eingesetzt werden, wobei deren Verwendung nicht bevorzugt ist.

Dieses poröse Copolymer und seine Herstellung ist in US 2010/0292353 A1, Absatz [0009] bis [0020] beschrieben.

Die erfindungsgemäßen Antischaummittel bzw. deren Pulver haben den Vorteil, dass sie das Schaumverhalten des Waschmittels im Waschgang nicht beeinflussen und erst bei den Spülgängen zeitlich verzögert eine gute Entschäumerwirkung auftritt.

Im Vergleich zu nicht-modifizierten Aminölen weisen die erfindungsgemäßen, modifizierten Aminöle eine bessere Lagerstabilität auf. Die erfindungsgemäßen Antischaummittel bzw. deren Pulver haben damit den Vorteil, dass die Entschäumerwirkung auch nach Lagerung nicht oder nur wenig vermindert wird.

Die erfindungsgemäßen Antischaummittel bzw. deren Pulver haben weiterhin den Vorteil, große Mengen an Wasser durch Vermeidung von unnötigen Spülgängen einzusparen und können für unterschiedliche Anwendungsgebiete wie zum Beispiel Personal Care, Hair Care, Home Care und dergleichen verwendet werden.

Gegenstand der Erfindung sind daher Waschmittelzusammensetzungen enthaltend

(A) erfindungsgemäße Antischaummittel oder deren Pulver und
(B) übliche Waschmittelkomponenten.

Die erfindungsgemäßen Antischaummittel oder deren Pulver werden in den Waschmittelzusammensetzungen in Mengen von vorzugsweise 0,5 bis 5 Gew.-%, bezogen auf die Waschmittelzusammensetzung, eingesetzt.

Vorzugsweise werden die Waschmittelzusammensetzungen für die Handwäsche oder die maschinenunterstützte Handwäsche eingesetzt. Sie können aber auch für die Maschinenwäsche verwendet werden.

Beispiele für übliche Waschmittelkomponenten (B) für die Hand- oder Maschinenwäsche sind Tenside, vorzugsweise anionische und nicht-ionische Tenside, Builders, Bleichmittel, Enzyme, chelatbildende Verbindungen und Parfüme, wie zum Beispiel in Handbook of Detergents, Part D, Chapt. 3, S. 51 ff.: Randall A. Watson "Laundry Detergent Formulations" beschrieben.

**Beispiele:**

In den nachstehend beschriebenen Beispielen beziehen sich alle Viskositätsangaben auf eine Temperatur von 25°C.
Die Bestimmung der Viskositäten für die Organopolysiloxane erfolgt mit dem Brookfield-Viskosimeter nach DIN EN ISO 2555.

**1. Synthese der erfindungsgemäßen modifizierten Aminöle**

**Beispiel 1:**

2,14 g 4-Methyl-1,3-dioxolan-2-on und 80,0 g eines seitenständig funktionalisierten, Trimethylsilyl-terminiertem Aminoethyl-aminopropyl-polydimethylsiloxans mit einer Aminzahl von 2,08 mmol/g und einer Viskosität von 210 mPas werden in einem Kolben vorgelegt (Zweiphasengemisch), auf 60°C erwärmt und bei dieser Temperatur für 2 h gerührt. Aus dem zunächst trüben Reaktionsgemisch erhält man eine klare Lösung des modifizierten Aminöls (Aminöl 1).

Die primären Aminogruppen des Siloxanrohstoffs werden zu ca. 25% umgesetzt. Im $^1$H-NMR ist die Bildung des Signals der C$H_2$-NHC(O)-Gruppe zwischen 3,1 und 3,4 ppm auf 24,6% (bezogen auf die Summe aller Signale der Si-CH$_2$-Gruppe zwischen 0,3 und 0,6 ppm) erkennbar.

**Beispiel 2:**

4,26 g 4-Methyl-1,3-dioxolan-2-on und 80,0 g eines seitenständig funktionalisierten, Trimethylsilyl-terminiertem Aminoethyl-aminopropyl-polydimethylsiloxans mit einer Aminzahl von 2,07 mmol/g und einer Viskosität von 3020 mPas (Edukt 2) werden in einem Kolben vorgelegt (Zweiphasengemisch), auf 60°C erwärmt und bei dieser Temperatur für 2 h gerührt. Aus dem zunächst trüben Reaktionsgemisch erhält man eine klare Lösung des modifizierten Aminöls (Aminöl 2).

Die primären Aminogruppen des Siloxanrohstoffs werden zu ca. 50% umgesetzt. Im $^1$H-NMR ist die Bildung des Signals der C$H_2$-NHC(O)-Gruppe zwischen 3,1 und 3,4 ppm auf 49,7% (bezogen auf die Summe aller Signale der Si-CH$_2$-Gruppe zwischen 0,3 und 0,6 ppm) erkennbar.

**Beispiel 3:**

5,75 g 4-Methyl-1,3-dioxolan-2-on und 70,0 g eines seitenständig funktionalisierten, Trimethylsilyl-terminiertem

Aminoethyl-aminopropyl-polydimethylsiloxans (verdünnt mit 18,9 g Isopropanol) mit einer Aminzahl von 2,13 mmol/g (Edukt 3) und einer Viskosität von 6330 mPas werden in einem Kolben vorgelegt (Zweiphasengemisch), auf 60°C erwärmt und bei dieser Temperatur für 2 h gerührt. Aus dem zunächst trüben Reaktionsgemisch erhält man eine klare Lösung des modifizierten Aminöls in Isopropanol (80%ig) (Aminöl 3).

Die primären Aminogruppen des Siloxanrohstoffs werden zu ca. 50% umgesetzt. Im $^1$H-NMR ist die Bildung des Signals der C$H_2$-NHC(O)-Gruppe zwischen 3,1 und 3,4 ppm auf 73,5% (bezogen auf die Summe aller Signale der Si-CH$_2$-Gruppe zwischen 0,3 und 0,6 ppm) erkennbar.

**Beispiel 4:**

10,7 g 4-Methyl-1,3-dioxolan-2-on und 100,0 g eines seitenständig funktionalisierten, Trimethylsilyl-terminiertem Aminopropyl-polydimethylsiloxans mit einer Aminzahl von 2,09 mmol/g und einer Viskosität von 779 mPas werden in einem Kolben vorgelegt (Zweiphasengemisch), auf 60°C erwärmt und bei dieser Temperatur für 2 h gerührt. Aus dem zunächst trüben Reaktionsgemisch erhält man eine klare Lösung des modifizierten Aminöls (Aminöl 4).

Die primären Aminogruppen des Siloxanrohstoffs werden zu ca. 50% umgesetzt. Im $^1$H-NMR ist die Bildung des Signals der C$H_2$-NHC(O)-Gruppe zwischen 3,0 und 3,3 ppm auf 49,6% (bezogen auf die Summe aller Signale der Si-CH$_2$-Gruppe zwischen 0,3 und 0,6 ppm) erkennbar.

**Beispiel 5:**

6,14 g 4-(Hydroxymethyl)-1,3-dioxolan-2-on und 100,0 g eines seitenständig funktionalisierten, Trimethylsilyl-terminiertem Aminopropyl-polydimethylsiloxans mit einer Aminzahl von 2,09 mmol/g und einer Viskosität von 779 mPas werden in einem Kolben vorgelegt (Zweiphasengemisch), auf 60°C erwärmt und bei dieser Temperatur für 2 h gerührt. Aus dem zunächst trüben

Reaktionsgemisch erhält man eine klare Lösung des modifizierten Aminöls (Aminöl 5).

Die primären Aminogruppen des Siloxanrohstoffs werden zu ca. 25% umgesetzt. Im $^1$H-NMR ist die Bildung des Signals der C$H_2$-NHC(O)-Gruppe zwischen 3,0 und 3,3 ppm auf 26,1% (bezogen auf die Summe aller Signale der Si-CH$_2$-Gruppe zwischen 0,3 und 0,6 ppm) erkennbar.

**2. Herstellung der erfindungsgemäßen Antischaumpulver bzw. der nicht-erfindungsgemäßen Antischaumpulver**

In einem Becherglas werden 90 g Natriumcarbonat-Pulver (Hersteller: Sigma-Aldrich, Artikelnummer 330361, Partikelgröße: <100 μm: 3,25 %, 100 - 200 μm: 26,00 %, 200 - 315 μm: 46,29 %, 315 - 500 μm: 23,74 %, 500 - 1000 μm: 0,67 %, 1000 - 2000 μm: 0,05 %, >2000 μm: 0 %;) vorgelegt und mit einem Flügelrührer bei 750 UpM gerührt. Anschließend werden innerhalb von 2 min gleichmäßig mit einer Pipette jeweils 10 g der oben beschriebenen modifizierten Aminöle 1 bis 5 (gemäß Beispiele 1 bis 5) bzw. der nicht-modifizierten Aminöl-Edukte 2 und 3 (nicht-erfindungsgemäß) aus den Beispielen 2 und 3 zu dem Natriumcarbonat-Pulver gegeben. Nach vollständiger Dosierung wird noch 1 min nachgerührt

**3. Anwendungstechnische Untersuchungen für Handwäsche**

Die Handwaschtests wurden analog zu folgendem Protokoll durchgeführt:

- In einer Schüssel werden für den Waschgang 5,0 l vollentsalztes Wasser vorgelegt.

- 17,5 g der Tide Pulverwaschmittel, Prod. Nr. 99353576 (Hersteller Procter & Gamble, China) werden in einem Becherglas mit 1,05 g Antischaumpulver (wie oben unter Punkt 2 hergestellt) gemischt und in die Schüssel zugegeben.

- Die resultierende Flotte wird für 2 min leicht bewegt, so dass sich die Waschmittelformulierung auflöst.

- Ein vorgewaschenes und trockenes Frotteehandtuch (100% Baumwolle, Größe ca. 45 x 90 cm; Flächengewicht ca. 500 g/m$^2$) wird in vier Teile zerschnitten und gewogen.

- Jeweils ein Frotteestück wird zehnmal in die Flotte getaucht und ausgewrungen.

- 30 Sekunden nach dem letzten Tauchen bzw. Auswringen wird die Waschflotte von oben fotografiert und die schaumbedeckte Oberfläche in Prozent geschätzt.

- Alle vier Frotteestücke werden auf einen Gewichtszuwachs von 390 g (+/- 0,5 g) ausgewrungen.

- Für den Spülgang werden in einer weiteren Schüssel 5,0 l vollentsalztes Wasser vorgelegt.

- Alle vier Frotteestücke werden in die Schüssel gegeben und jeweils dreimal getaucht und ausgewrungen.

- Alle vier Frotteestücke werden auf einem Gewichtszuwachs von 450 g gebracht.

- Nach 30 Sekunden wird von der Spülflotte ein Foto gemacht und die schaumbedeckte Oberfläche in Prozent geschätzt.

- Insgesamt werden 5 Spülgänge mit jeweils frischem Wasser gemacht.

Die Ergebnisse sind in Tabelle 1 zusammengefasst.

**Tabelle 1: Schaum im Waschgang und in den Spülgängen bei Handwäsche**

| AntischaumPulver Beispiele/ Vergleichsbeispiel | Schaum Waschgang [%] | Schaum Spülgang 1 [%] | Schaum Spülgang 2 [%] | Schaum Spülgang 3 [%] | Schaum Spülgang 4 [%] | Schaum Spülgang 5 [%] |
|---|---|---|---|---|---|---|
| Blindwert | 100 | 100 | 90 | 40 | 10 | 10 |
| Beispiel 1 | 100 | 95 | 0 | 0 | 0 | 0 |
| Beispiel 2 | 100 | 100 | 0 | 0 | 0 | 0 |
| Beispiel 3 | 100 | 100 | 0 | 0 | 0 | 0 |
| Beispiel 4 | 100 | 5 | 0 | 0 | 0 | 0 |
| Beispiel 5 | 100 | 30 | 0 | 0 | 0 | 0 |

Bei den in der Tabelle 1 angegebenen Beispielen wurden Antischaumpulver nach der in Punkt 2 beschriebenen Vorgehensweise hergestellt unter Verwendung der in den Bespielen 1 bis 5 beschriebenen Aminöle. Die Konzentration des Aminöls auf dem Trägermaterial Natriumcarbonat betrug in allen Fällen 10 %.
Die erfindungsgemäßen Beispiele zeigen eine gute Entschäumerwirkung im Spülgang, wobei das Schäumen im Waschgang kaum beeinflusst wird.

**4. Untersuchungen zur Lagerstabilität der hergestellten Antischaumpulver**

Für die Untersuchungen zur Lagerstabilität wurden die modifizierten Aminöle aus den Beispielen 2 und 3 mit den entsprechenden Edukten 2 und 3 verglichen. Die Edukte 2 und 3 sind die entsprechenden, nicht modifizierten Aminöle und dienen als Vergleichsbeispiele.

Die Reaktionsprodukte der Beispiele 2 und 3 sowie die Edukte 2 und 3 werden analog zu "2. Herstellung der erfindungsgemäßen Antischaumpulver bzw. der nicht-erfindungsgemäßen Antischaumpulver" in die entsprechenden Antischaumpulver überführt.

Jeweils 5 g dieser Antischaumpulver werden in einem Becherglas mit 45 g der Tide Pulverwaschmittel, Prod. Nr. 99353576 (Hersteller Procter & Gamble, China) gemischt. Die resultierenden Pulver werden in einer Kunststofffolie eingeschweißt und bei 40°C und einer Luftfeuchtigkeit von 80% gelagert. Nach jeder Probenentnahme wird die Kunststofffolie wieder zugeschweißt.

Die Handwaschtests werden analog zu "3. Anwendungstechnische Untersuchungen für Handwäsche" durchgeführt, mit dem Unterschied, dass die oben hergestellten Mischungen direkt eingesetzt werden.

Die Ergebnisse sind in Tabelle 2 zusammengefasst.

**Tabelle 2: Schaum im Waschgang und den Spülgängen bei Handwäsche nach unterschiedlichen Lagerzeiten [Wochen]**

| AntischaumPulver Beispiele/Vergl. Edukte | Schaum Waschgang [%] | Schaum Spülgang 1 [%] | Schaum Spülgang 2 [%] | Schaum Spülgang 3 [%] | Schaum Spülgang 4 [%] | Schaum Spülgang 5 [%] |
|---|---|---|---|---|---|---|
| Beispiel 2 (t = 0 Wochen) | 100 | 100 | 0 | 0 | 0 | 0 |
| Beispiel 2 (t = 4 Wochen) | 100 | 100 | 0 | 0 | 0 | 0 |
| Beispiel 2 (t = 8 Wochen) | 100 | 100 | 0 | 0 | 0 | 0 |
| Beispiel 2 (t = 12 Wochen) | 100 | 100 | 20 | 5 | 0 | 0 |
| Beispiel 3 (t = 0 Wochen) | 100 | 100 | 0 | 0 | 0 | 0 |
| Beispiel 3 (t = 4 Wochen) | 100 | 100 | 0 | 0 | 0 | 0 |
| Beispiel 3 (t = 8 Wochen) | 100 | 100 | 25 | 10 | 0 | 0 |
| Beispiel 3 (t = 12 Wochen) | 100 | 100 | 40 | 15 | 5 | 0 |
| Vergl. Edukt 2 (t = 0 Wochen) | 100 | 100 | 10 | 5 | 0 | 0 |
| Vergl. Edukt 2 (t = 4 Wochen) | 100 | 100 | 60 | 30 | 10 | 0 |
| Vergl. Edukt 3 (t = 0 Wochen) | 100 | 100 | 5 | 5 | 0 | 0 |
| Vergl. Edukt 3 (t = 4 Wochen) | 100 | 100 | 70 | 35 | 20 | 5 |

Die Beispiele 2 und 3 (erfindungsgemäße Antischaumpulver mit den modifizierten Aminölen) zeigen auch nach einer längeren Lagerung eine gute Entschäumerwirkung im Spülgang, während die Edukte 2 und 3 (nicht-erfindungsgemäße Antischaumpulver mit den nicht-modifizierten Aminölen) bereits nach 4 Wochen ihre Wirkung verloren haben.

**Patentansprüche**

1. Antischaumpulver mit verzögerter Antischaumwirkung enthaltend

   (1) 5 bis 35 Gew.-% eines Antischaummittels, welches ein modifiziertes, aminofunktionelles Organopolysiloxan bestehend aus mindestens einer Siloxaneinheit der Formel

   $$R^1{}_a Q_b SiO_{\frac{4-(a+b)}{2}} \qquad (I)$$

   und Siloxaneinheiten der Formel

   $$R^1{}_c SiO_{\frac{4-c}{2}} \qquad (II)$$

   ist, wobei

   $R^1$ gleich oder verschieden ist und ein Wasserstoffatom, einen einwertigen, gegebenenfalls mit Fluor-, Chlor- oder Brom-atomen substituierten $C_1$- bis $C_{18}$-Kohlenwasserstoffrest oder einen $C_1$- bis $C_{12}$-Alkoxy-rest oder einen Hydroxyrest bedeutet,
   Q gleich oder verschieden ist und einen modifizierten oder nicht-modifizierten Aminorest der Formel

   $$-R^2-[NR^3-(CH_2)_m-]_x NR^4 R^5 \qquad (III)$$

   oder deren teilweise oder vollständig an den Stickstoffatomen protonierte Formen bedeutet,
   wobei
   $R^2$ einen zweiwertigen $C_1$-$C_{18}$-Kohlenwasserstoffrest bedeutet,
   $R^3$ ein Wasserstoffatom, einen $C_1$-$C_{10}$-Alkylrest oder einen Rest G der Formel

   $$-C(=O)-O-R^6 \qquad (IV),$$

   bedeutet,
   $R^4$ ein Wasserstoffatom, einen $C_1$-$C_{10}$-Alkylrest oder einen Rest G der Formel (IV) bedeutet,
   $R^5$ ein Wasserstoffatom, einen $C_1$-$C_{10}$-Alkylrest oder einen Rest G der Formel (IV) bedeutet,
   $R^6$ einen einwertigen Kohlenwasserstoffrest mit 1 bis 18 C-Atomen, der unsubstituiert ist oder mit einer oder zwei Hydroxygruppen substituiert ist, bedeutet, mit der Maßgabe, dass mindestens ein Rest Q mindestens einen Rest G der Formel (IV) aufweist,
   a 0, 1 oder 2 ist,
   b 1, 2 oder 3 ist,
   c 0, 1, 2 oder 3 ist,
   m 2, 3, oder 4 ist und
   x 0, 1 oder 2 ist,

   und die Summe a+b kleiner gleich 3 ist, und
   (2) 65 bis 95 Gew.-% eines Trägermaterials ausgewählt aus der Gruppe von Natriumcarbonat, Natriumsulfat, Aluminiumsilikat, Kaliumcarbonat, Kaliumsulfat, Natriumhydrogencarbonat, Kaliumhydrogencarbonat, Zeolithe, poröses Copolymer aus Harnstoff oder Melamin oder deren Gemischen mit einem Alkanal und Mischungen davon.

2. Antischaumpulver nach Anspruch 1, **dadurch gekennzeichnet, dass** als modifiziertes, aminofunktionelles Organopolysiloxan (1) solches der allgemeinen Formel

   $$Q_k R^1{}_{3-k} SiO(R_2 SiO)_p (QR^1 SiO)_n SiR^1{}_{3-k} Q_k \qquad (V),$$

   wobei

   R gleich oder verschieden ist und einen einwertigen $C_1$- bis $C_{18}$-Kohlenwasserstoffrest bedeutet,

R$^1$ die im Anspruch 1 dafür angegebene Bedeutung hat,
Q die im Anspruch 1 dafür angegebene Bedeutung hat,
k 0 oder 1 ist,
p 0 oder eine ganze Zahl von 1 bis 1000 ist,
n 0 oder eine ganze Zahl von 1 bis 50 ist,
mit der Maßgabe, dass das Organopolysiloxan der Formel (V) mindestens einen Rest Q, der mindestens einen Rest G der Formel (IV) gemäß Anspruch 1 aufweist, je Molekül enthält, eingesetzt wird.

3. Antischaumpulver nach Anspruch 1 oder 2, **dadurch gekennzeichnet, dass** G ein Rest der Formel

-C(=O)-O-CH$_2$CH(CH$_3$)OH          (VI)

ist.

4. Antischaumpulver nach Anspruch 1, 2 oder 3, **dadurch gekennzeichnet, dass** die Reste Q ein Rest der Formel NH$_2$CH$_2$CH$_2$NH(CH$_2$)$_3$- oder deren teilweise oder vollständig protonierte Formen N$^+$H$_3$CH$_2$CH$_2$NH(CH$_2$)$_3$- Z$^-$ oder N$^+$H$_3$CH$_2$CH$_2$N$^+$H$_2$(CH$_2$)$_3$- 2 Z$^-$ oder modifizierte Aminoreste (G-)NHCH$_2$CH$_2$NH(CH$_2$)$_3$-NH$_2$CH$_2$CH$_2$(G-)N(CH$_2$)$_3$-, (G-)NHCH$_2$CH$_2$(G-)N(CH$_2$)$_3$-, (G-)$_2$NCH$_2$CH$_2$NH(CH$_2$)$_3$- oder (G-)$_2$NCH$_2$CH$_2$(G-)N(CH$_2$)$_3$-, wobei die modifizierten Reste teilweise oder ganz an den Stickstoffatomen protoniert sein können, sind, mit der Maßgabe, dass mindestens ein modifizierter Aminorest im Organopolysiloxan (1) enthalten ist, wobei
G ein Rest der Formel (IV) gemäß Anspruch 1, vorzugsweise ein Rest der Formel (VI) gemäß Anspruch 3, ist,
Z$^-$ ein Anion zu N$^+$ ist, vorzugsweise ein Anion einer korrespondierenden Säure, bevorzugt ein Anion einer Carbonsäure, wie ein Acetatanion, ist.

5. Antischaumpulver nach einem der Ansprüche 1 bis 4, **dadurch gekennzeichnet, dass** R$^1$ einen C$_1$- bis C$_{18}$-Kohlenwasserstoffrest oder einen C$_1$- bis C$_3$-Alkoxyrest oder einen Hydroxyrest bedeutet.

6. Verfahren zur Herstellung der Antischaumpulver nach einem der Ansprüche 1 bis 5, **dadurch gekennzeichnet, dass** das modifizierte, aminofunktionelle Organopolysiloxan (1) mit dem Trägermaterial (2) gemischt wird.

7. Waschmittelzusammensetzungen enthaltend

(A) Antischaummittel (1) nach einem der Ansprüche 1 bis 5 oder Antischaumpulver enthaltend Antischaummittel (1) und Trägermaterial (2) nach einem der Ansprüche 1 bis 5 oder hergestellt nach Anspruch 6, und
(B) übliche Waschmittelkomponenten.

**Claims**

1. Antifoam powder with delayed antifoam effect, comprising

(1) 5 to 35% by weight of an antifoam agent, which is a modified, aminofunctional organopolysiloxane consisting of at least one siloxane unit of the formula

$$R^1{}_aQ_bSiO_{\frac{4-(a+b)}{2}} \quad (I)$$

and siloxane units of the formula

$$R^1{}_cSiO_{\frac{4-c}{2}} \quad (II),$$

where

$R^1$ is identical or different and is a hydrogen atom, a monovalent, optionally fluorine-, chlorine- or bromine-atom-substituted $C_1$- to $C_{18}$-hydrocarbon radical or a $C_1$- to $C_{12}$-alkoxy radical or a hydroxy radical,

Q is identical or different and is a modified or unmodified amino radical of the formula

$$-R^2-[NR^3-(CH_2)_m-]_xNR^4R^5 \qquad (III)$$

or forms thereof partially or completely protonated on the nitrogen atoms,

where

$R^2$ is a divalent $C_1$-$C_{18}$-hydrocarbon radical,

$R^3$ is a hydrogen atom, a $C_1$-$C_{10}$-alkyl radical or a radical **G** of the formula

$$-C(=O)-O-R^6 \qquad (IV),$$

$R^4$ is a hydrogen atom, a $C_1$-$C_{10}$-alkyl radical or a radical **G** of the formula (IV),

$R^5$ is a hydrogen atom, a $C_1$-$C_{10}$-alkyl radical or a radical **G** of the formula (IV),

$R^6$ is a monovalent hydrocarbon radical having 1 to 18 carbon atoms which is unsubstituted or is substituted with one or two hydroxy groups, with the proviso that at least one radical Q has at least one radical G of the formula (IV), a is 0, 1 or 2,

b is 1, 2 or 3,

c is 0, 1, 2 or 3,

m is 2, 3 or 4 and

x is 0, 1 or 2,

and the sum a+b is less than or equal to 3, and

(2) 65 to 95% by weight of a carrier material selected from the group of sodium carbonate, sodium sulfate, aluminium silicate, potassium carbonate, potassium sulfate, sodium hydrogen carbonate, potassium hydrogen carbonate, zeolites, porous copolymer of urea or melamine or mixtures thereof with an alkanal and mixtures thereof.

2. Antifoam powder according to Claim 1, **characterized in that** the modified, aminofunctional organopolysiloxane (1) used is one of the general formula

$$Q_kR^1_{3-k}SiO(R_2SiO)_p(QR^1SiO)_nSiR^1_{3-k}Q_k \qquad (V),$$

where

R is identical or different and is a monovalent $C_1$-to $C_{18}$-hydrocarbon radical,

$R^1$ has the meaning given for it in Claim 1,

Q has the meaning given for it in Claim 1,

k is 0 or 1,

p is 0 or an integer from 1 to 1000,

n is 0 or an integer from 1 to 50,

with the proviso that the organopolysiloxane of the formula (V) contains at least one radical Q, which has at least one radical **G** of the formula (IV) according to Claim 1, per molecule.

3. Antifoam powder according to Claim 1 or 2, **characterized in that** G is a radical of the formula

$$-C(=O)-O-CH_2CH(CH_3)OH \qquad (VI).$$

4. Antifoam powder according to Claim 1, 2 or 3, **characterized in that** the radicals Q
are a radical of the formula $NH_2CH_2CH_2NH(CH_2)_3-$ or their partially or completely protonated forms $N^+H_3CH_2CH_2NH(CH_2)_3-$ $Z^-$ or $N^+H_3CH_2CH_2N^+H_2(CH_2)_3-$ $2 Z^-$ or modified amino radicals $(G-)NHCH_2CH_2NH(CH_2)_3-$, $NH_2CH_2CH_2(G-)N(CH_2)_3-$, $(G-)NHCH_2CH_2(G-)N(CH_2)_3-$, $(G-)_2NCH_2CH_2NH(CH_2)_3-$ or $(G-)_2NCH_2CH_2(G-)N(CH_2)_3-$, where the modified radicals can be partially or completely protonated on the nitrogen atoms, with the proviso that at least one modified amino radical is present in the organopolysiloxane (1), where
**G** is a radical of the formula (IV) according to Claim 1, preferably a radical of the formula (VI) according to Claim 3,
$Z^-$ is an anion to $N^+$, preferably an anion of a corresponding acid, preferably an anion of a carboxylic acid, such as an acetate anion.

5. Antifoam powder according to one of Claims 1 to 4, **characterized in that** $R^1$ is a $C_1$- to $C_{18}$-hydrocarbon radical or a $C_1$- to $C_3$-alkoxy radical or a hydroxy radical.

6. Process for producing the antifoam powder according to one of Claims 1 to 5, **characterized in that** the modified, aminofunctional organopolysiloxane (1) is mixed with the carrier material (2).

7. Detergent compositions comprising

    (A) antifoam agent (1) according to one of Claims 1 to 5 or antifoam powder comprising antifoam agent (1) and carrier material (2) according to one of Claims 1 to 5 or produced according to Claim 6, and
    (B) customary detergent components.

**Revendications**

1. Poudre antimousse présentant un effet antimousse retardé contenant

    (1) 5 à 35 % en poids d'un produit antimousse, qui est un organopolysiloxane aminofonctionnel modifié constitué d'au moins une unité siloxane de formule

$$R^1_a Q_b SiO_{\frac{4-(a+b)}{2}} \quad (I)$$

    et des unités siloxane de formule

$$R^1_c SiO_{\frac{4-c}{2}} \quad (II),$$

    $R^1$ étant identique ou différent et signifiant un atome d'hydrogène, un radical $C_{1-18}$-hydrocarbure monovalent, éventuellement substitué par des atomes de fluor, de chlore ou de brome ou un radical $C_{1-12}$-alcoxy ou un radical hydroxy,
    Q étant identique ou différent et signifiant un radical amino modifié ou non modifié de formule

$$-R^2-[NR^3-(CH_2)_m-]_x NR^4 R^5 \quad (III)$$

    ou ses formes partiellement ou totalement protonées au niveau des atomes d'azote,
    $R^2$ signifiant un radical $C_{1-18}$-hydrocarbure divalent,
    $R^3$ signifiant un atome d'hydrogène, un radical $C_{1-10}$-alkyle ou un radical G de formule

$$-C(=O)-O-R^6 \quad (IV),$$

    $R^4$ signifiant un atome d'hydrogène, un radical $C_{1-10}$-alkyle ou un radical G de formule (IV), $R^5$ signifiant un atome d'hydrogène, un radical $C_{1-10}$-alkyle ou un radical G de formule (IV),
    $R^6$ signifiant un radical hydrocarbure monovalent comportant 1 à 18 atome(s) de C, qui est non substitué ou qui est substitué par un ou deux groupes hydroxy,
    étant entendu qu'au moins un radical Q présente au moins un radical G de formule (IV),
    a étant 0, 1 ou 2,
    b étant 1, 2 ou 3,
    c étant 0, 1, 2 ou 3,
    m étant 2, 3 ou 4 et
    x étant 0, 1 ou 2,
    et la somme a + b étant inférieure ou égale à 3, et

    (2) 65 à 95 % en poids d'un matériau de support choisi dans le groupe du carbonate de sodium, du sulfate de sodium, du silicate d'aluminium, du carbonate de potassium, du sulfate de potassium, de l'hydrogénocarbonate de sodium, de l'hydrogénocarbonate de potassium, des zéolithes, du copolymère poreux composé d'urée ou de mélamine ou de leurs mélanges avec un alcanal et des mélanges correspondants.

2. Poudre antimousse selon la revendication 1, **caractérisée en ce qu'**en tant qu'organopolysiloxane aminofonctionnel modifié (1), celui de formule générale

$$Q_kR^1_{3-k}SiO(R_2SiO)_p(QR^1SiO)_nSiR^1_{3-k}Q_k \qquad (V),$$

es utilisé,

R étant identique ou différent et signifiant un radical $C_{1-18}$-hydrocarbure monovalent,
$R^1$ possédant la signification indiquée dans la revendication 1,
Q possédant la signification indiquée dans la revendication 1,
k étant 0 ou 1,
p étant 0 ou un nombre entier de 1 à 1000,
n étant 0 ou un nombre entier de 1 à 50,
étant entendu que l'organopolysiloxane de formule (V) contient par molécule au moins un radical Q, qui présente au moins un radical G de formule (IV) selon la revendication 1.

3. Poudre antimousse selon la revendication 1 ou 2, **caractérisée en ce que** G est un radical de formule

$$-C(=O)-O-CH_2CH(CH_3)OH \qquad (VI).$$

4. Poudre antimousse selon la revendication 1, 2 ou 3, **caractérisée en ce que** les radicaux Q sont un radical de formule $NH_2CH_2CH_2NH(CH_2)_3-$ ou leurs formes partiellement ou totalement protonées $N^+H_3CH_2CH_2NH(CH_2)_3-$ $Z^-$ ou $N^+H_3CH_2CH_2N^+H_2(CH_2)_3-$ $2Z^-$ ou des radicaux amino modifiés $(G-)NHCH_2CH_2NH(CH_2)_3-$, $NH_2CH_2CH_2(G-)N(CH_2)_3-$, $(G-)NHCH_2CH_2(G-)N(CH_2)_3-$, $(G-)_2NCH_2CH_2NH(CH_2)_3-$ ou $(G-)_2NCH_2CH_2(G-)N(CH_2)_3-$, les radicaux amino modifiés pouvant être partiellement ou totalement protonés au niveau des atomes d'azote, étant entendu qu'au moins un radical amino modifié est contenu dans l'organopolysiloxane (1),
G étant un radical de formule (IV) selon la revendication 1, de préférence un radical de formule (VI) selon la revendication 3,
$Z^-$ étant un anion de $N^+$, de préférence un anion d'un acide correspondant, préférablement un anion d'un acide carboxylique, comme un anion acétate.

5. Poudre antimousse selon l'une quelconque des revendications 1 à 4, **caractérisée en ce que** $R^1$ signifie un radical $C_{1-18}$-hydrocarbure ou un radical $C_{1-3}$-alcoxy ou un radical hydroxy.

6. Procédé pour la préparation de la poudre antimousse selon l'une quelconque des revendications 1 à 5, **caractérisé en ce que** l'organopolysiloxane aminofonctionnel modifié (1) est mélangé avec le matériau de support (2).

7. Compositions de lessive contenant

(A) un produit antimousse (1) selon l'une quelconque des revendications 1 à 5 ou une poudre antimousse contenant le produit antimousse (1) et le matériau de support (2) selon l'une quelconque des revendications 1 à 5 ou préparé selon la revendication 6, et
(B) des composants de lessive habituels.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4637890 A
- US 4894117 A
- EP 254499 B1
- US 20130309498 A1
- WO 2011107361 A2
- WO 2011107397 A1
- EP 685250 A1
- WO 2013189825 A1
- US 20100292353 A1